# EUROPÄISCHE PATENTSCHRIFT

(11) **EP 2 459 625 B1**
(45) Veröffentlichungstag und Bekanntmachung des Hinweises auf die Patenterteilung: **10.05.2017**
(21) Anmeldenummer: 10735210.6
(22) Anmeldetag: 21.07.2010
(51) Int. Cl.: B29C 44/04, C08J 9/36, C08L 25/12, C08L 51/08, C08L 67/02, C08L 69/00, C08J 9/00

(54) **VERBESSERTE HAFTUNG ZWISCHEN THERMOPLASTEN UND POLYURETHAN**
IMPROVED ADHESION BETWEEN THERMOPLASTICS AND POLYURETHANE
ADHÉRENCE AMÉLIORÉE ENTRE DES MATIÈRES THERMOPLASTIQUES ET DES POLYURÉTHANES

(30) Priorität: 01.08.2009 DE 102009035807
(43) Veröffentlichungstag der Anmeldung: 06.06.2012
(73) Patentinhaber: Covestro Deutschland AG, 51373 Leverkusen (DE)
(72) Erfinder: DRUBE, Wolfgang, 51519 Odenthal (DE); MÖLLER, Philipp, 50679 Köln (DE); KLANKERS, Hans-Jürgen, 51375 Leverkusen (DE); LOOF, Dirk, 51399 Burscheid (DE)
(74) Vertreter: Levpat
(86) Internationale Anmeldenummer: PCT/EP2010/004442
(87) Internationale Veröffentlichungsnummer: WO 2011/015286

(56) Entgegenhaltungen:
- EP-A2- 1 055 717
- EP-A2- 1 414 905
- US-A- 4 301 053
- US-A1- 2009 011 213
- DATABASE WPI Week 200414 Thomson Scientific, London, GB; AN 2004-136174 XP002605137 & JP 2003 136647 A (KURARAY CO LTD) 14. Mai 2003 (2003-05-14)

## Beschreibung

Die Erfindung betrifft ein Verfahren zur Herstellung von Verbundmaterialien enthaltend als erste Schicht einen geschäumten thermoplastischen Träger und als zweite Schicht Polyurethan (PUR), wobei sich die resultierenden Verbundmaterialien durch eine verbesserte Schaumhaftung auszeichnen.

Die Verwendung von Zusammensetzungen enthaltend aromatisches Polycarbonat und kautschukmodifiziertes Pfropfpolymerisat als kompaktes Trägermaterial (d.h. nicht geschäumtes) in einem Verbund mit Polyurethan ist bekannt.

Aus der EP-A 1057851 ist ein Verbundmaterial aus Polyurethan und einem kompakten thermoplastischen Kunststoff bekannt, in dem der Polyurethanschicht zur Haftungsverbesserung homogen verteilte Teilchen einer mittleren Teilchengröße von 1 bis 10 nm enthält, die mit einem thermoplastischen Kunststoff überzogen sind.

Aus der EP-A 1055717 ist ferner ein Verbundmaterial aus Polyurethan und einem kompakten thermoplastischen Material bekannt, wobei zur Verbesserung der Haftung zwischen Polyurethan und thermoplastischer Schicht Polyurethan eingesetzt wird, das einen Restgehalt an freien ethergruppenhaltigen Reaktionskomponenten von höchstens 400 ppm aufweist.

Aus der JP 2003-136647 A ist ein Verbundmaterial bekannt, welches eine Schicht (a) zur Oberflächenbehandlung, eine Schicht (b) aus einer Polymerzusammensetzung, enthaltend 67 Gew.-% an thermoplastischen Polyurethan und eine Schicht (c) aus einem thermoplastischen Polymerschaum aufweist.

US 4,301,053 A beschreibt ein Substrat, welches mit einer wässrigen Dispersion enthaltend ein mit Carboxylgruppen funktionalisiertes Polyurethan-Präpolymer beschichtet wird und im Anschluss daran bei 66 bis 93 °C ausgehärtet wird. Die ausgehärtete Beschichtung soll eine gute Haftung auf diversen Substraten zeigen, insbesondere auf einem Polycarbonatsubstrat.

EP 1 414 905 A2 beschreibt ein mittels Extrusion hergestelltes Substrat aus einem thermoplastischen Material, auf welches ein Polyurethanschaumsystem aufgebracht und ausgehärtet wird. Die Schicht aus Polyurethanschaum soll eine gute Haftung auf dem Polycarbonat zeigen.

Im Stand der Technik werden kompakte thermoplastische Träger mit oder ohne Struktur im Werkzeug hergestellt. Abhängig vom eingesetzten Thermoplasten (beispielsweise glasfaserverstärktes Polypropylen oder schlagzähmodifiziertes Polycarbonat) wird gegebenenfalls die Oberfläche des thermoplastische Trägers durch beispielsweise Primern oder Aktivierung modifiziert. Diese Modifizierung der Oberfläche des thermoplastischen Trägers wird insbesondere dann angewandt, wenn zum Verbund ein hochreaktives Polyurethan-System (d.h. mit einer Formstandzeit von weniger als 100 Sekunden) eingesetzt wird.

Der Erfindung liegt die Aufgabe zugrunde, einen verbesserten Verbund zwischen dem thermoplastischen Trägermaterial und dem Polyurethan zu erreichen, mit der Maßgabe, dass keine Modifizierung der Oberfläche (insbesondere Primern oder eine Oberflächenaktivierung) des thermoplastischen Trägers benötigt wird, insbesondere wenn zum Verbund ein hochreaktives Polyurethan-System (d.h. mit einer Formstandzeit von weniger als 100 Sekunden) eingesetzt wird. Dabei soll der resultierende Verbund kraftschlüssig haften. Diese Haftung wird insbesondere nach den Prüfkriterien Anfangshaftung, Haftung nach doppeltem Klimawechseltest (in Anlehnung an PV1200 der Volkswagen AG) und Bloomingtest beurteilt.

Diese Aufgabe wird überraschenderweise und erfindungsgemäß durch ein Verfahren gelöst, dadurch gekennzeichnet, dass
(i) eine geschäumte Polycarbonat-Formmasse mit Hilfe von chemischen oder physikalischen Schäumverfahren im Spritzgussverfahren hergestellt wird,
   wobei als Polycarbonat-Formmasse eine Zusammensetzung enthaltend
   A) 20 - 99,9 Gew.-Teile aromatisches Polycarbonat und/oder aromatisches Polyestercarbonat,
   B) 0,1 - 40 Gew.-Teile kautschukmodifiziertes Pfropfpolymerisat,
   C) 0 - 40 Gew.-Teile Vinyl(Co)Polymerisat (C.1) und/oder Polyalkylenterephthalat (C.2),
   D) 0 - 50 Gew.-Teile Glasfaser, und
   E) 0 - 30 Gew.-Teile Zusatzstoffe eingesetzt wird, und
(ii) darauf ein Polyurethanreaktionssystem aufgebracht und ausreagiert gelassen wird.

Gegenstand der Erfindung ist somit auch die Verwendung von geschäumten Polycarbonat-Formmassen als Trägermaterial für Polyurethan, insbesondere geschäumtes Polyurethan basierend auf aromatischen Isocyanaten, sowie die resultierenden Verbundkörper.

Die Verwendung geschäumter Polycarbonat-Formmassen als thermoplastischem Träger hat den Vorteil, dass der Kraftschluss zwischen dem thermoplastischen Träger und dem Polyurethan verbessert wird, und dass zwischen dem thermoplastischen Träger und dem Polyurethan eine verbesserte Haftung (insbesondere nach doppeltem Klimawechseltest) resultiert, ohne dass ein weiterer Verarbeitungsschritt zur Oberflächenaktivierung oder Primern des Trägermaterials) notwendig ist. Die Einsparung dieses Verarbeitungsschrittes hat große ökonomische Bedeutung.

Für die Herstellung des geschäumtes Thermoplasten werden Zusammensetzungen und Formmassen enthaltend
A) bevorzugt 50 - 91,5 Gew.-Teile aromatisches Polycarbonat und/oder aromatisches Polyestercarbonat,
B) bevorzugt 0,4 - 35 Gew.-Teile kautschukmodifiziertes Pfropfpolymerisat,
C) bevorzugt 1 - 30 Gew.-Teile Vinyl(Co)Polymerisat (C.1) und/oder Polyalkylenterephthalat (C.2),
D) bevorzugt 7 bis 35 Gew.-Teile Glasfaser, und
E) bevorzugt 0,1 - 18 Gew.-Teile, besonders bevorzugt 0,5 - 5 Gew.-Teile Zusatzstoffe, wobei die Summe der Komponenten A + B + C + D + E auf 100 Gew.-Teile normiert ist,
eingesetzt.

In einer bevorzugten Ausführungsform der Erfindung sollen die Polycarbonat-Zusammensetzungen ferner hervorragende mechanische Eigenschaften (insbesondere hohe Steifigkeit, hohe Wärmeformbeständigkeit und geringer Längenausdehnungskoeffizient) besitzen.

Überraschend wurde gefunden, dass bei Verwendung von Zusammensetzungen des thermoplastischen Trägers, welche Glasfasern (Komponente D) enthalten, auch diese weitere technische Aufgabe gelöst wird.

Die einzelnen Komponenten der erfindungsgemäßen Polycarbonat-Zusammensetzung und des Verbunds mit Polyurethan werden nachfolgend beispielhaft erläutert.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 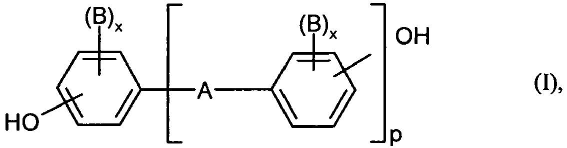 wobei
A eine Einfachbindung, C₁ bis C₅-Alkylen, C₂ bis C₅-Alkyliden, C₅ bis C₆-Cycloalkyliden,-O-, -SO-, -CO-, -S-, -SO₂-, C₆ bis C₁₂-Arylen, an das weitere aromatische gegebenenfalls Heteroatome enthaltende Ringe kondensiert sein können,
   oder ein Rest der Formel (II) oder (III) 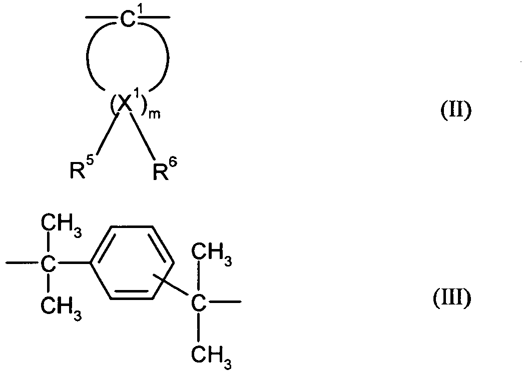
B jeweils C₁ bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X¹ Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxy-phenyl)-2-methylbutan, 1,1-Bis-(4-hydroxyphenyl)-cyclohexan, 1,1-Bis-(4-hydroxyphenyl)-3,3,5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%mol-%, und 10 mol-%mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure. Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 mol-%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetra-chlorid, 1,4,5,8-Napthalintetracarbon-säuretetrachlorid oder Pyromellithsäuretetrachlorid, in Mengen von 0,01 bis 1,0 mol-% (bezogen auf eingesetzte Dicarbonsäuredichloride) oder drei-oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis-(4-hydroxy-phenyl)-cyclohexyl]-propan, 2,4-Bis-(4-hydroxyphenyl-isopropyl)-phenol, Tetra-(4-hydroxyphenyl)-methan, 2,6-Bis-(2-hydroxy-5'-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis-[4',4"-dihydroxytriphenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Die Komponente B umfasst ein oder mehrere Pfropfpolymerisate von
B.1 10 bis 90 Gew.-%, vorzugsweise 20 bis 60 Gew.-%, insbesondere 25 bis 50 Gew.-%, bezogen auf Komponente B, wenigstens eines Vinylmonomeren auf
B.2 90 bis 10 Gew.-%, vorzugsweise 80 bis 40 Gew.-%, insbesondere 75 bis 50 Gew.-%, bezogen auf Komponente B, wenigstens einer Pfropfgrundlage ausgewählt aus der Gruppe bestehend aus Dienkautschuke, EP(D)M-Kautschuke (d.h. solche auf Basis Ethylen/Propylen und gegebenenfalls Dien), Acrylat-, Polyurethan-, Silikon-, Silikonacrylat-, Chloropren und Ethylen/Vinylacetat-Kautschuke.

Die Pfropfgrundlage B.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere B.1 sind vorzugsweise Gemische aus
B.1.1 50 bis 99 Gew.-Teilen Vinylaromaten und/oder kernsubstituierten Vinylaromaten (wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat), und
B.1.2 1 bis 50 Gew.-Teilen Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril.

Bevorzugte Pfropfgrundlagen B.2 sind Silikonkautschuke, Silikonacrylatkautschuke, Dienkautschuke (beispielsweise auf Basis Butadien und Isopren) oder Gemische von Dienkautschuken. Unter Dienkautschuken im erfindungsgemäßen Sinne sind auch Copolymerisate von Dienkautschuken oder deren Gemischen mit weiteren copolymerisierbaren Monomeren (z.B. gemäß B.1.1 und B.1.2) zu verstehen. Die Pfropfgrundlagen B.2 weisen im allgemeinen eine Glasübergangstemperatur von < 10°C, vorzugsweise < 0°C, besonders bevorzugt < -10°C auf.

Besonders bevorzugte Polymerisate B sind beispielsweise ABS-Polymerisate und MBS-Polymerisate, bevorzugt solche in Emulsionspolymerisation hergestellten, wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage B.2 beträgt mindestens 20 Gew.-%, im Falle von im Emulsionspolymerisation hergestellten Pfropfgrundlagen B.2 vorzugsweise mindestens 40 Gew.-% (in Toluol gemessen).

Vorzugsweise weist das Pfropfpolymerisat aus den Komponenten B.1 und B.2 eine Kern-Schale-Struktur auf, wobei die Komponente B.1 die Schale bildet (auch als Hülle bezeichnet) und die Komponente B.2 den Kern ausbildet.

Die Pfropfcopolymerisate B werden durch radikalische Polymerisation, z.B. durch Emulsions-, Suspensions-, Lösungs- oder Massepolymerisation, vorzugsweise durch Emulsionspolymerisation hergestellt.

Besonders geeignete Pfropfkautschuke sind auch Pfropfcopolymerisate B, die im Emulsionspolymerisationsverfahren durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl-und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di-und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzenden Monomere beträgt vorzugsweise 0,02 bis 5, insbesondere 0,05 bis 2 Gew.-%, bezogen auf die Pfropfgrundlage B.2. Bei cyclischen vernetzenden Monomeren mit mindestens drei ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Geeignete Silikonkautschuke gemäß B.2. können durch Emulsionspolymerisation hergestellt werden, wie beispielsweise in US 2891920 und US 3294725 beschrieben. Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Als Pfropfgrundlagen B.2 sind erfindungsgemäß auch Silikonacrylat-Kautschuke geeignet. Diese Silikonacrylat-Kautschuke sind Komposit-Kautschuke mit pfropfaktiven Stellen enthaltend 10 - 90 Gew.-% Silikonkautschuk-Anteil und 90 bis 10 Gew.-% Polyalkyl(meth)acrylatkautschuk-Anteil, wobei sich die beiden genannten Kautschuk-Komponenten im Komposit-Kautschuk gegenseitig durchdringen können, so dass sie sich nicht wesentlich voneinander trennen lassen, oder aber eine Kern-Schale-Struktur aufweisen können. Silikonacrylat-Kautschuke sind bekannt und beispielsweise beschrieben in US 5,807,914, EP 430134 und US 4888388. Vorzugsweise eingesetzt werden solche Pfropfpolymerere auf Basis von Silikonacrylat-Kautschuken, hergestellt in Emulsionspolymerisation, mit B.1 Methylmethacrylat oder B.1.1 Styrol und B.1.2 Acrylnitril.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente C

Die Komponente C umfasst ein oder mehrere thermoplastische Vinyl(Co)Polymerisate C.1 und/oder Polyalkylenterephthalate C.2.

Geeignet sind als Vinyl(Co)Polymerisate C.1 Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
C.1.1 50 bis 99, vorzugsweise 60 bis 80 Gew.-Teilen Vinylaromaten und/oder kernsub-stituierten Vinylaromaten wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat), und
C.1.2 1 bis 50, vorzugsweise 20 bis 40 Gew.-Teilen Vinylcyanide (ungesättigte Nitrile) wie Acryl-nitril und Methacrylnitril und/oder (Meth)Acryl-säure-(C₁-C₈)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate C.1 sind harzartig, thermoplastisch und kautschukfrei. Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Polyalkylenterephthalate der Komponente C.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclo-hexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente D

In einer bevorzugten Ausführungsform der Erfindung werden als Komponente D geschnittene oder gemahlene Glasfasern eingesetzt.

Vorzugsweise ist Komponente D eine geschlichtete Glasfaser mit
D.1 einer Glasfaser ausgewählt aus mindestens einer Komponente der Gruppe bestehend aus Endlosfaser (rovings), Langglasfaser und Schnittglasfaser,
D.2 einer Schlichte enthaltend ein Epoxidpolymer, wobei beispielsweise die Schlichte die Oberfläche der Glasfaser teilweise oder vollständig bedeckt und/oder eventuell vorhandene Poren der Glasfaser füllt, und
D.3 gegebenenfalls einem Haftvermittler.

Schlichte D.2 und Haftvermittler D.3 kommen in der Komponente D bevorzugt in einer solchen Menge zum Einsatz, dass der Gehalt an Kohlenstoff gemessen an der Komponente D bei 0,1 bis 1 Gew.-%, bevorzugt bei 0,2 bis 0,8 Gew.-%, besonders bevorzugt bei 0,3 bis 0,7 Gew.-% liegt.

Die Glasfaser gemäß Komponente D.1 werden vorzugsweise aus E-, A- oder C-Glas hergestellt. Der Durchmesser der Glasfaser beträgt bevorzugt 5 bis 25 µm, besonders bevorzugt 6 bis 20 µm, höchst bevorzugt 7 bis 15 µm. Die Langglasfasern weisen bevorzugt eine Länge von 5 bis 50 mm, besonders bevorzugt von 5 bis 30 mm, höchst bevorzugt von 7 bis 25 mm auf. Langglasfasern werden beispielsweise in WO-A 2006/040087 beschrieben. Die Schnittglasfasern weisen bevorzugt zu mindestens 70 Gew.-% der Glasfasern eine Länge von mehr als 60 µm auf.

Die Schlichte D.2 besteht vorzugsweise aus
D.2.1 50 bis 100 Gew.%, bevorzugt 70 bis 100 Gew.%, besonders bevorzugt 80 bis 100 Gew.-% (jeweils bezogen auf D.2) Epoxidpolymer und
D.2.2 0 bis 50 Gew.-%, bevorzugt 0 bis 30 Gew.-%, besonders bevorzugt 0 bis 20 Gew.-% (jeweils bezogen auf D.2) eines oder mehrerer weiterer Polymere,

Höchst bevorzugt besteht die Schlichte D.2 ausschließlich aus Epoxidpolymer D.2.1 (d.h. die Schlichte D.2 ist frei von weiteren Polymeren gemäß Komponente D.2.2).

Bei dem Epoxidpolymer gemäß Komponente D.2.1 kann es sich beispielsweise um ein Epoxidharz, um einen Epoxidharz-Ester oder um ein Epoxidharz-Polyurethan handeln.

In bevorzugter Ausführungsform handelt es sich bei dem Epoxidpolymer gemäß Komponente D.2.1 um ein Epoxidharz hergestellt aus
D.2.1.1 Epichlorhydrin, und
D.2.1.2 einem bevorzugt aromatischen Alkohol, der mindestens zwei Hydroxylgruppen aufweist.

Vorzugsweise ist Komponente D.2.1.2 ein Phenolharz, zum Beispiel ein Novolak, oder eine Verbindung der Formel (I). Besonders bevorzugt ist Komponente D.2.1.2 Bisphenol-A.

Vorzugsweise ist Komponente D.2.2 mindestens ein Polymer ausgewählt aus der Gruppe bestehend aus Polyurethane, Polyolefine, acrylatenthaltende Polymere, styrolenthaltende Polymere und Polyamide.

Vorzugsweise ist Komponente D.3 ein Silan. Das Silan besitzt in bevorzugter Ausführungsform eine funktionelle Gruppe ausgewählt aus der Gruppe der Amino-Gruppe, Epoxy-Gruppe, Carboxylsäure-Gruppe, Vinyl-Gruppe und Mercapto-Gruppe zur Anbindung an das Polymer der Schlichte, sowie eine bis drei, bevorzugt drei Alkoxy-Gruppen zur Anbindung an die Glasfaser. Beispielsweise und bevorzugt wird als Komponente D.3 mindestens ein Silan ausgewählt aus der Gruppe bestehend aus Vinyltrichlorsilan, Vinyltriethoxysilan, Vinyltrimethoxysilan, γ-Methacryloxypropyltrimethoxysilan, β-(3,4-Epoxcyclohexyl)ethyltrimethoxysilane, γ-Glycidoxypropyltrimethoxysilan, N-β(Aminoethyl)γ-Aminopropyltrimethoxysilan, γ-Aminopropyltriethoxysilan, N-Phenyl-γ-Aminopropyltrimethoxysilan, γ-Mercaptopropyltrimethoxysilan und γ-Chloropropyltrimethoxysilan eingesetzt. Geschlichtete Glasfasern, welche die Komponente D.3 enthalten, weisen eine bessere Haftung der Schlichte an der Glasfaser auf.

### Komponente E

Die Zusammensetzung kann als Komponente E weitere Zusätze enthalten, wobei insbesondere Polymeradditive wie Flammschutzmittel (z.B. organische Phosphor- oder Halogenverbindungen, insbesondere Bisphenol-A basierendes Oligophosphat), Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Antistatika (beispielsweise Leitruße, Carbonfasern, Carbon Nanotubes sowie organische Antistatika wie Polyalkylenether, Alkyl Sulfonate oder Polyamid-haltige Polymere), Stabilisatoren, von Komponente D verschiedene Füll- und Verstärkungsmaterialien sowie Farbstoffe und Pigmente (beispielsweise Titandioxid oder Eisenoxid) in Frage kommen.

Als von Komponente D verschiedene Füll- und Verstärkungsmaterialien kommen beispielsweise Glasperlen, Glaskugeln, Keramikkugeln, blättchenförmiges Verstärkungsmaterial (wie Kaolin, Talk, Glimmer), Silikate, Quarz, Talkum, Titandioxid, Wollastonit, Mika, Kohlefasern oder deren Mischungen in Betracht. Bevorzugte Füll- und Verstärkungsmaterialien sind Glaskugeln, Glimmer, Silikate, Quarz, Talkum, Titandioxid und/oder Wollastonit.

### Herstellung der geschäumten Polycabonat-Formmasse (Schicht (1)):

Die erfindungsgemäßen geschäumten Polycarbonat-Formmassen werden im Spritzgussverfahren hergestellt,
(i-1) indem die jeweiligen Bestandteile der Polycarbonat-Zusammensetzung (Komponenten A bis E) in bekannter Weise vermischt werden. Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.
(i-2) Anschließend wird die aus Schritt (i-1) resultierende Mischung bei Temperaturen von 200°C bis 320°C, vorzugsweise bei 250°C bis 290°C in üblichen Aggregaten wie Innenknetern, Extrudern und Doppelwellenschnecken schmelzcompoundiert und schmelzextrudiert,
   dadurch gekennzeichnet, dass in Schritt (i-2)
   (i-2.1) ein Batch (enthaltend chemisches Treibmittel und mindestens eine der Komponenten A, B oder C) mit der aus Schritt (i-1) resultierenden Mischung dem Extruder zugeführt wird, oder
   (i-2.2) ein chemisches Treibmittel mit der aus Schritt (i-1) resultierenden Mischung vermischt wird (beispielsweise durch auftrommeln, d.h. das chemische Treibmittel wird in einer Trommel mit der als Granulat vorliegenden aus Schritt (i-1) resultierenden Mischung vermischt), oder
   (i-2.3) ein physikalisches Treibmittel in die Schmelze zudosiert wird. Vorzugsweise erfolgt diese Zudosierung
      - in die Schnecke des Extruders oder der Doppelwellenschnecke, oder
      - in den Schneckenvorraum des Extruders oder der Doppelwellenschnecke, oder
      - in das resultierende Gemisch unmittelbar nach dem Innenkneter, Extruder oder der Doppelwellenschnecke.

Vorzugsweise wird in Schritt (i-2) die aus Schritt (i-1) resultierende Mischung bei Temperaturen von 200°C bis 320°C, vorzugsweise bei 250°C bis 290°C in einem Extruder schmelzcompoundiert und schmelzextrudiert, dadurch gekennzeichnet, dass in Schritt (i-2) ein physikalisches Treibmittel in die Schmelze der Schnecke des Extruders zudosiert wird, beispielsweise nach dem MuCell-Verfahren der Firma Trexel Ltd.

Im allgemeinen wird als chemisches Treibmittel beispielsweise Zitronensäure und/oder Ameisensäure eingesetzt. Im allgemeinen wird als physikalisches Treibmittel ein inertes Gas (wie beispielsweise Stickstoff, Argon oder Kohlendioxid) eingesetzt.

Aufgrund ihrer verbesserten Hafteigenschaften sind die erfindungsgemäßen geschäumten Polycarbonat-Formmassen besonders geeignet als Trägermaterial bei der Herstellung von Verbundmaterialien mit Polyurethanen. Derartige Verbundformkörper finden beispielsweise Verwendung als Innenausbauteile für Kraft-, Schienen-, Luft-, und Wasserfahrzeuge, insbesondere im Armaturenbereich.

Die Erfindung umfasst daher auch Verbundmaterialien, die mindestens eine erste Schicht (1) und eine zweite Schicht (2) enthalten und worin Schicht (1) mindestens eine erfindungsgemäße geschäumte Polycarbonat-Formmasse und Schicht (2) mindestens ein Polyurethan enthalten, und wobei Schicht (1) unmittelbar mit Schicht (2) verbunden ist.

Als Schicht (2) wird vorzugsweise ein Polyurethanschaum oder eine kompakte Polyurethanschicht eingesetzt.

Die erfindungsgemäß zum Einsatz kommenden Polyurethane bzw. Polyurethanharnstoffe erhält man durch Umsetzung von Polyisocyanaten mit H-aktiven polyfunktionellen Verbindungen, vorzugsweise Polyolen.

Als Polyisocyanate kommen bevorzugt solche in Frage, die aus der Polyurethanchemie bekannt und dort üblicherweise eingesetzt werden. Es handelt sich dabei insbesondere um Polyisocyanate auf aromatischer Basis, z.B. 2,4-Diisocyanatotoluol, dessen technische Gemische mit 2,6-Diisocyanatotoluol, 4,4'-Diisocyanatodiphenyl-methan, dessen Gemische mit den entsprechenden 2,4'- und 2,2'-Isomeren, Polyisocyanatgemische der Diphenylmethanreihe, wie sie durch Phosgenierung von Anilin/Formaldehyd-Kondensaten in an sich bekannter Weise gewonnen werden können, die Biuret- oder Isocyanatgruppen aufweisenden Modifizierungsprodukte dieser technischen Polyisocyanate und insbesondere NCO-Prepolymere der genannten Art auf Basis dieser technischen Polyisocyanate einerseits und einfachen Polyolen und/oder Polyetherpolyolen und/oder Polyesterpolyolen andererseits sowie beliebige Gemische derartiger Isocyanate, sofern sie ausreichend lagerstabil sind.

Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis 10.000, vorzugsweise 600 bis 8.000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole des Molekulargewichtsbereichs 82 bis 599, vorzugsweise 62 bis 200, wie z.B. Ethylenglykol, Trimethylolpropan, Propandiol-1,2 oder Butandiol-1,4 oder Butandiol-2,3, insbesondere jedoch höhermolekulare Polyetherpolyole und/oder Polyesterpolyole der aus der Polyurethanchemie an sich bekannten Art mit Molekulargewichten von 600 bis 8.000, vorzugsweise 800 bis 4.000, die mindestens zwei, ind er Regel 2 bis 8, vorzugsweise aber 2 bis 4 primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind.

Zur Herstellung der NCO-Prepolymeren geeignete Verbindungen mit gegenüber Isocyanatgruppen reaktionsfähigen Gruppen, insbesondere Hydroxylgruppen, sind beispielsweise die in der US-A 4 218 543 offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO-Überschusses zur Umsetzung gebracht. Die NCO-Prepolymeren weisen im allgemeinen einen NCO-Gehalt von 10 bis 25, vorzugsweise 15 bis 22 Gew.% auf. Hieraus geht bereits hervor, dass im Rahmen der vorliegenden Erfindung unter "NCO-Prepolymeren" bzw. unter "Prepolymeren mit endständigen Isocyanatgruppen" sowohl die Umsetzungsprodukte als solche als auch die Gemische mit überschüssigen Mengen an nicht umgesetzten Ausgangspolyisocyanaten, die oft auch als "Semiprepolymere" bezeichnet werden, zu verstehen sind.

Die Polyisocyanatkomponente besitzt eine mittlere Funktionalität von 2 bis 3, bevorzugt von 2,3 bis 2,7.

Zur Einstellung eines bestimmten NCO-Gehaltes der Isocyanat-Komponente kann es sinnvoll sein, Anteile von Roh-MDI mit einem NCO-Prepolymeren abzumischen. Die im Roh-MDI enthaltenen Anteile an höherfunktionellem Material (Funktionalität >4) können ohne weiteres toleriert werden, sofern die mittlere Funktionalität von 3 bei der Isocyanat-Komponente nicht überschritten wird.

Als aliphatische Diole mit einer OH-Zahl von >500 mg KOH/g kommen die üblicherweise in der Polyurethanchemie vernetzten Kettenverlängerer in Betracht wie Ethylenglykol, Diethylenglykol, Propylenglykol, Dipropylenglykol, Butandiol-1,4, Propandiol-1,3. Bevorzugt sind Diole wie 2-Butandiol-1,4, Butendiol-1,3, Butandiol-2,3, 2-Butandiol-1,4 und/oder 2-Methylpropandiol-1,3. Selbstverständlich ist es auch möglich, die aliphatischen Diole im Gemisch untereinander einzusetzen.

Als H-aktive Komponente eignen sich Polyole mit einer mittleren OH-Zahl von 5 bis 500 mg KOH/g und einer mittleren Funktionalität von 2 bis 6, bevorzugt 2 bis 4, besonders bevorzugt. 2,7 bis 3. Bevorzugt sind Polyole mit einer mittleren OH-Zahl von 10 bis 50 mg KOH/g. Erfindungsgemäß geeignete Polyole stellen beispielsweise Polyhydroxypolyether dar, die durch Alkoxylierung geeigneter Startermoleküle wie Ethylenglykol, Diethylenglykol, 1,4-Dihydroxy-butan, 1,6-Dihydroxyhexan, Dimethylolpropan, Glycerin, Pentaerythrit, Sorbit oder Saccharose zugänglich sind. Als Starter können ebenfalls fungieren Ammoniak oder Amine wie Ethylendiamin, Hexamethylendiamin, 2,4-Diaminotoluol, Anilin oder Aminoalkohole oder Phenole wie Bisphenol-A. Die Alkoxylierung erfolgt unter Verwendung von Propylenoxid und/oder Ethylenoxid in beliebiger Reihenfolge oder als Gemisch.

Ferner geeignet sind Polyesterpolyole, wie sie durch Umsetzung niedermolekularer Alkohole mit mehrwertigen Carbonsäuren wie Adipinsäure, Phthalsäure, Hexahydrophthalsäure, Tetrahydrophthalsäure oder den Anhydriden dieser Säuren in an sich bekannter Weise zugänglich sind, sofern die Viskosität der H-aktiven Komponente nicht zu groß wird. Ein bevorzugtes Polyol, das Estergruppen aufweist, ist Rizinusöl. Daneben sind auch Zubereitungen mit Rizinusöl, wie sie durch Auflösung von Harzen, z.B. von Aldehyd-Keton-Harzen, erhalten werden können, sowie Modifikationen von Rizinusöl und Polyole auf Basis anderer natürlicher Öle geeignet.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxyverbindungen werden in an sich bekannter Weise z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen lässt. Es ist aber auch möglich, eine fertige wässrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für die Herstellung von Polyurethanen geeignet. Bei Verwendung von Polyetherpolyolen, welche gemäß DE-A 2 442 101, DE-A 2 844 922 und DE-A 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit.

Vertreter der genannten, als H-aktiven Verbindungen zu verwendenden Verbindungen sind z.B. in High Polymers, Vol. XVI, "Polyurethanes Chemistry and Technology", Saunders-Frisch (Hrg.) Interscience Publishers, New York, London, Bd. 1, S. 32-42, 44,54 und Bd. II, 1984, s. 5-6 und S. 198-199 beschrieben.

Es können auch Gemische der aufgezählten Verbindungen eingesetzt werden.

Die Begrenzung der mittleren OH-Zahl und mittleren Funktionalität der H-aktiven Komponente ergibt sich insbesondere aus der zunehmenden Versprödung des resultierenden Polyurethans. Grundsätzlich sind dem Fachmann aber die Einflussmöglichkeiten auf die polymerphysikalischen Eigenschaften des Polyurethans bekannt, so dass NCO-Komponente, aliphatisches Diol und Polyol in günstiger Weise aufeinander abgestimmt werden können.

Die Polyurethanschicht (2) kann geschäumt oder massiv, wie z.B. als Lack oder Beschichtung vorliegen.

Zu deren Herstellung können alle an sich bekannten Hilfs- und Zusatzstoffe wie z.B. Trennmittel, Treibmittel, Füllstoffe, Katalysatoren und Flammschutzmittel eingesetzt werden.

Gegebenenfalls als Hilfs- und Zusatzmittel sind dabei zu verwenden:

### a) Wasser und/oder leicht flüchtige anorganische oder organische Substanzen als Treibmittel

Als organische Treibmittel kommen z.B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittel Luft, CO₂ oder N₂O in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden.

### b) Katalysatoren

Bei den Katalysatoren handelt sich beispielsweise um
tertiäre Amine (wie Triethylamin, Tributylamin, N-Methylmorpholin, N-Ethylmorpholin, N,N,N',N'-Tetramethylethylendiamin, Pentamethyldiethylentriamin und höhere Homologe, 1,4-Diazabicyclo-(2,2,2)octan, N-Methyl-N'-dimethylaminoethylpiperazin, Bis-(dimethylaminoalkyl)piperazine, N,N-Dimethylbenzylamin, N,N-Dimethylcyclohexylamin, N,N-Diethylbenzylamin, Bis-(N,N-diethylamino-ethyl)adipat, N,N,N',N'-Tetramethyl-1,3-butandiamin, N,N-Dimethyl-β-phenylethylamin, 1,2-Dimethylimidazol, 2-Methylimidazol),
monocyclische und bicyclische Amide,
Bis-(dialkylamino)alkylether,
Amidgruppen (vorzugsweise Formamidgruppen) aufweisende tertiäre Amine,
Mannichbasen aus sekundären Aminen (wie Dimethylamin) und Aldehyden, (vorzugsweise Formaldehyd oder Ketonen wie Aceton, Methylethylketon oder Cyclohexanon) und Phenolen (wie Phenol, Nonylphenol oder Bisphenol),
gegenüber Isocyanatgruppen aktive Wasserstoffatome aufweisende tertiäre Amine (z.B. Triethanolamin, Triisopropanolamin, N-Methyldiethanolamin, N-Ethyldietanolamin, N,N-Dimethylethanolamin), sowie deren Umsetzungsprodukte mit Alkylenoxiden wie Propylenoxid und/oder Ehtylenoxid,
sekundärtertiäre Amine,
Silaamine mit Kohlenstoff-Silicium-Bindungen (2,2,4-Trimethyl-2-silamorpholin und 1,3-Diethylaminomethyltetramethyldisiloxan),
stickstoffhaltige Basen (wie Tetraalkylammoniumhydroxide),
Alkalihydroxide (wie Natriumhydroxid, Alkaliphenolate wie Natriumphenolat),
Alkalialkoholate (wie Natriummethylat), und/oder
Hexahydrotriazine.

Die Reaktion zwischen NCO-Gruppen und Zerewitinoff-aktiven Wasserstoffatomen wird in an sich bekannter Weise auch durch Lactame und Azalactame stark beschleunigt, wobei sich zunächst ein Assoziat zwischen dem Lactam und der Verbindung mit acidem Wasserstoff ausbildet.

Es können auch organische Metallverbindungen, insbesondere organische Zinnverbindungen, als Katalysatoren verwendet werden. Als organische Zinnverbindungen kommen neben schwefelhaltigen Verbindungen wie Di-noctyl-zinn-mercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle oben genannten Katalysatoren als Gemische eingesetzt werden. Von besonderem Interesse sind dabei Kombinationen aus organischen Metallverbindungen und Amidinen, Aminopyridinen oder Hydrazinopyridinen.

Die Katalysatoren werden in der Regel in einer Menge von etwa 0,001 und 10 Gew.%, bezogen auf die Gesamtmenge an Verbindungen mit mindestens zwei gegenüber Isocyanaten reaktionsfähigen Wasserstoffatomen, eingesetzt.

### c) Oberflächenaktive Zusatzstoffe wie Emulgatoren und Schaumstabilisatoren.

Als Emulgatoren kommen z.B. die Natriumsalze von Rizinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Rizinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist. Von besonderem Interesse sind vielfach über Allophanatgruppen verzweigte Polysiloxan-Polyoxyalkylen-Copolymere.

### d) Reaktionsverzögerer

Als Reaktionsverzögerer kommen z.B. sauer reagierende Stoffe (wie Salzsäure oder organische Säurehalogenide), ferner Zellregler der an sich bekannten Art (wie Paraffine oder Fettalkohole) oder Dimethylpolysiloxane sowie Pigmente oder Farbstoffe und Flammschutzmittel der an sich bekannten Art (z.B. Tris-chlorethylphosphat, Trikresylphosphat oder Ammoniumphosphat und -polyphosphat), ferner Stabilisatoren gegen Alterungs- und Witterungseinflüsse, Weichmacher und fungistatisch und bakteriostatisch wirkende Substanzen sowie Füllstoffe (wie Bariumsulfat, Kieselgut, Ruß oder Schlämmkreide) in Betracht.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sind dem Fachmann bekannt und in der Literatur beschrieben.

Gemäß einer weiteren bevorzugten Ausführungsform der Erfindung umfasst das erfindungsgemäße Verbundmaterial mindestens noch eine weitere polymere Schicht (3), insbesondere eine Schicht auf Basis von Polyvinylchlorid (PVC), auf Basis von Polyurethan (vorzugsweise eine Sprühhaut aus Polyurethan) oder einem thermoplastischen Urethan (TPU). Schicht (3) ist vorzugsweise unmittelbar mit Schicht (2) verbunden.

### Herstellung des Verbundmaterials:

Die Verbunde können in bekannter Weise hergestellt werden. Vorzugsweise Schicht (1) aus der erfindungsgemäßen Polycarbonat-Zusammensetzung vorgefertigt und darauf das Polyurethanreaktionssystem aufgebracht und ausreagiert. Je nach Reaktivität der Polyurethanreaktionskomponenten können diese bereits vorgemischt sein oder während des Auftragens in bekannter Weise vermischt werden.

Verbunde enthaltend die Schichten (1), (2) und (3) können in bekannter Weise hergestellt werden. Vorzugsweise wird das Polyurethanreaktionssystem zwischen einer aus der erfindungsgemäßen Polycarbonat-Zusammensetzung vorgefertigte Schicht (1) und einer polymeren Schicht (3) eingebracht und ausreagiert gelassen. Je nach Reaktivität der Polyurethanreaktionskomponenten können diese bereits vorgemischt sein oder während des Auftragens in bekannter Weise vermischt werden. Alternativ kann die Schicht (3) auf ein Verbund enthaltend die Schichten (1) und (2) aufgebracht werden; Dies erfolgt vorzugsweise durch Sprühen, Rakeln oder Kalandrieren.

Insbesondere werden die Polyurethanreaktionskomponenten nach dem an sich bekannten Einstufenverfahren, dem Prepolymerverfahren oder dem Semiprepolymerverfahren zur Umsetzung gebracht. Einzelheiten über Verarbeitungseinrichtungen werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Polyurethan-Schaumstoffherstellung kann erfindungsgemäß die Verschäumung auch in geschlossenen Formen durchgeführt werden. Dabei wird das Reaktionsgemisch in eine Form eingetragen, in der sich bereits die Schicht (1) und gegebenenfalls Schicht (3) befindet. Als Formmaterial kommt Metall oder eine Legierung (z.B. Aluminium, Eisen, Stahl), oder Kunststoff (z.B. Epoxidharz) in Frage.

In der Form schäumt das schäumfähige Reaktionsgemisch auf und bildet den VerbundFormkörper. Die Formverschäumung kann dabei so durchgeführt werden, dass das Formteil an seiner Oberfläche Zellstruktur aufweist, sie kann aber auch so durchgeführt werden, dass das Formteil eine kompakte Haut und einen zelligen Kern aufweist. Dabei kann man in diesem Zusammenhang so vorgehen, dass man in die Form so viel schäumfähiges Reaktionsgemisch einträgt, dass der gebildete Schaumstoff die Form gerade ausfüllt. Man kann aber auch so arbeiten, dass man mehr schäumfähiges Reaktionsgemisch in die Form einträgt, als zur Ausfüllung des Forminneren mit Schaumstoff notwendig ist.

Bei der Formverschäumung werden vielfach an sich bekannte "äußere Trennmittel" wie Silikonöle mitverwendet. Man kann aber auch sogenannte "innere Trennmittel", gegebenenfalls im Gemisch mit äußeren Trennmitteln, verwenden.

Für die Herstellung kompakter PUR-Materialien werden die beiden Polyurethan-Reaktionskomponenten, wie oben dargestellt, durch einfaches Vermischen bei Raumtemperatur zur Reaktion gebracht.

Eine anschließende weitere Beschichtung der Schichten (1) und/oder (2) und/oder gegebenenfalls (3) kann durch die üblichen, bekannten Verfahren der Lackierung, Metallisierung oder weitere Beschichtung mit einer polymeren Schicht vorgenommen werden.

Die erfindungsgemäßen Verbundmaterialien werden vorzugsweise bei der Kfz-Herstellung verwendet, insbesondere bei der Auskleidung von weichen Innenraumteilen, z.B. als Instrumententafel oder Säulenverkleidungen.

Im folgenden wird die Erfindung anhand von Ausführungsbeispielen weiter erläutert.

### Beispiele

Entsprechend den Angaben der Tabelle 1 werden Polycarbonat-Zusammensetzungen hergestellt, zu Prüfkörpern weiterverarbeitet und geprüft.

### Komponente A-1

Lineares Polycarbonat auf Basis Bisphenol-A mit einem gewichtsgemittelten Molekulargewicht Mw von 28000 g/mol (bestimmt durch GPC).

### Komponente A-2

Lineares Polycarbonat auf Basis Bisphenol-A mit einem gewichtsgemittelten Molekulargewicht M̅_{w} von 27500 g/mol (bestimmt durch GPC).

### Komponente B-1

Metablen^{®} SRK200 (Mitsubishi Rayon, Japan): Styrol-Acrylnitril-gepfropfter Acrylat-Silikon-Kompositkautschuk, hergestellt in Emulsionspolymerisation.

### Komponente B-2

ABS-Polymerisat hergestellt durch Masse-Polymerisation von 82 Gew.-% bezogen auf das ABS-Polymerisat einer Mischung aus 24 Gew.-% Acrylnitril und 76 Gew.-% Styrol in Gegenwart von 18 Gew.-% bezogen auf das ABS-Polymerisat eines Polybutadien-Styrol-Blockcopolymerkautschuks mit einem Styrolgehalt von 26 Gew.-%. Das gewichtsgemittelte Molekulargewicht M̅ _{w} des freien SAN-Copolymeranteils im ABS-Polymerisat beträgt 80000 g/mol (gemessen per GPC in THF). Der Gelgehalt des ABS-Polymerisats beträgt 24 Gew.-% (gemessen in Aceton).

### Komponente B-3

Präcompound aus 50 Gew.-% eines ABS-Polymerisats hergestellt durch Emulsionsolymerisation und 50 Gew.-% eines SAN-Copolymerisats. Der Präcompound besitzt ein A:B:S-Gewichtsverhältnis von 17:26:57. Das gewichtsgemittelte Molekulargewicht des freien SAN-Copolymeranteils in diesem ABS-Präcompound beträgt 150000 g/mol. Der Gewichtsanteil des freien Copolymerisats beträgt ca. 60 Gew.-%.

### Komponente C

SAN-Copolymerisat mit einem Acrylnitrilgehalt von 23 Gew.-% und einem gewichtsgemittelten Molekulargewicht von etwa 130.000 g/mol.

### Komponente D

Schnittglasfaser mit einem mittleren Durchmesser von 13 µm und einer Schlichte aus Epoxidharz hergestellt aus Epichlorhydrin und Bisphenol-A; der Kohlenstoffgehalt der Schnittglasfaser beträgt 0,6 Gew.-%.
Komponente E-1: Pentaerythrittetrastearat
Komponente E-2: Phosphitstabilisator

### PUR-System 1:

Bayfill^{®} VP.PU 51IF88 G, Bayer MaterialScience AG, 51368 Leverkusen, Deutschland.

### PUR-System 2:

Bayfill^{®} VP.PU 51IF08 G, Bayer MaterialScience AG, 51368 Leverkusen, Deutschland.

### PUR-System 3:

Bayfill^{®} VP.PU 53IF10 G, Bayer MaterialScience AG, 51368 Leverkusen, Deutschland.

### PUR-System 4:

Bayfill^{®} VP.PU 53IF40 G, Bayer MaterialScience AG, 51368 Leverkusen, Deutschland.

### Polyproplyen-Träger (Vergleichsmaterial)

Alcom^{®} PP - C 620/200 LGF30 BK (ein Polypropylen Copolymer enthaltend 30% Langglasfasern der Firma ALBIS PLASTIC GMBH, Mühlenhagen 35, D-20539 Hamburg.

**Tabelle 1 Zusammensetzung der PC/ABS-Trägermaterialien**

| **Komponenten (Gew.-Teile)** | **PCS-1** | **PCS-2** |
|---|---|---|
| A-1 (Polycarbonat) | 61,94 | - |
| A-2 (Polycarbonat) | - | 59,36 |
| B-1 (Pfropfpolymerisat) | 0,50 | - |
| B-2 (Pfropfpolymerisat) | - | 11,87 |
| B-3 (Pfropfpolymerisat) | - | 20,18 |
| C-1 (Vinylcopolymer) | 26,97 | 7,52 |
| D (Glasfaser) | 9,99 | - |
| E-1 | 0,50 | 0,74 |
| E-2 | 0,10 | 0,32 |

### (a) Herstellung der Verbunde gemäß dem Stand der Technik (Vergleichsbeispiele 1 und 6):

Das Mischen der Komponenten der Polycarbonat-Zusammensetzungen erfolgte auf einem 3-1-Innenkneter. Proben der Polycarbonat-Zusammensetzungen wurden auf einer Spritzgießmaschine vom Typ Arburg 270 E bei 260°C hergestellt. Das PUR Gemisch wurde über eine Zweikomponentenanlage im Hochdruck Verfahren über einen Hochdruckmischkopf vermischt und dann mit Hilfe eines Handlingerätes in ein offenes Schaumwerkzeug gefüllt. Das Werkzeug wurde geschlossen und nach Ende der Reaktionszeit wurde das Teil entnommen.

Zur Herstellung des Verbundes wurden die Polycarbonat-Formmassen mit einer dünnen 17 mm Schicht aus 100 Gew.-Teilen des jeweiligen PUR-Systems und 44 Gew.-Teile Desmodur^{®} VP 44 V20LF (polymeres MDI, Bayer MaterialScience AG, Leverkusen, Deutschland) überzogen. Das Öffnen der Form erfolgte nach 80 bzw. 100 Sekunden, die Formstandzeit betrug 90 bzw 120 Sekunden, die Formtemperatur betrug 40°C.

### (b) Herstellung der erfindungsgemäßen Verbunde (Beispiele 2 bis 5 und 7 bis 10):

Das Mischen der Komponenten der Polycarbonat-Zusammensetzungen erfolgte auf einem 3-1-Innenkneter. Proben der Polycarbonat-Zusammensetzungen wurden auf einer Spritzgießmaschine vom Typ Arburg 270 E bei 260°C hergestellt. Dabei wurde nach dem MuCell-Verfahren der Fa. Trexel Inc. Stickstoff zugeführt..

Das PUR Gemisch wurde über eine Zweikomponentenanlage im Hochdruck Verfahren über einen Hochdruckmischkopf vermischt und dann mit Hilfe eines Handlingerätes in ein offenes Schaumwerkzeug gefüllt. Das Werkzeug wurde geschlossen und nach Ende der Reaktionszeit wurde das Teil entnommen.

Zur Herstellung des Verbundes wurden die Polycarbonat-Formmassen mit einer dünnen 17 mm Schicht aus 100 Gew.-Teilen des jeweiligen PUR-Systems und 44 Gew.-Teile Desmodur^{®} VP 44 V20LF (polymeres MDI, Bayer MaterialScience AG, Leverkusen, Deutschland) überzogen. Das Öffnen der Form erfolgte nach 80 bzw. 100 Sekunden, die Formstandzeit betrug 90 bzw 120 Sekunden, die Formtemperatur betrug 40°C.

### (c) Herstellung der Verbunde gemäß den Vergleichsbeispielen 11 bis 14:

Es wurde ein Polyproplyen-Träger (Alcom^{®} PP - C 620/200 LGF30 BK) als Vergleichsmaterial eingesetzt.

Das PUR Gemisch wurde über eine Zweikomponentenanlage im Hochdruck Verfahren über einen Hochdruckmischkopf vermischt und dann mit Hilfe eines Handlingerätes in ein offenes Schaumwerkzeug gefüllt. Das Werkzeug wurde geschlossen und nach Ende der Reaktionszeit wurde das Teil entnommen.

Zur Herstellung des Verbundes wurde der Polyproplyen-Träger mit einer dünnen 17 mm Schicht aus 100 Gew.-Teilen des jeweiligen PUR-Systems und 44 Gew.-Teile Desmodur^{®} VP 44 V20LF (polymeres MDI, Bayer MaterialScience AG, Leverkusen, Deutschland) überzogen. Das Öffnen der Form erfolgte nach 80 bzw. 100 Sekunden, die Formstandzeit betrug 90 bzw 120 Sekunden, die Formtemperatur betrug 40°C.

Zur Messung der Schaumadhäsion wurde das resultierende Verbundmaterial durch einen üblichen Rollenschälversuch in Anlehnung an DIN 53 357 getestet. Vor der Haftungsprüfung wurde der Schicht-Verbund einem doppelten Klimawechseltest (KWT 02A) unterzogen (10-tägige Belastung in einem Klimawechsel mit Zyklen von -40°C bis 80°C, 0 bis 80 % relativer Luftfeuchtigkeit und einer Zykluszeit von 24 Stunden). Die anschließende Haftungsprüfung wurde durch einen 90°-Schälversuch in Anlehnung an DIN 53 357 nach Reduzierung der Schaumdicke auf 2 mm durchgeführt.

Der Steilabfall und das Modul der Polycarbonat-Proben wurden gemäß ISO 180/1 A bzw. ISO 527 bestimmt.

Der Aufbau der Verbunde und die Testergebnisse sind in den Tabellen 2 bis 4 zusammengefasst.

**Tabelle 2: Verbunde enthaltend unverstärktes PC/ABS**

| Zusammensetzung | **1 (Vgl.)** | **2** | **3** | **4** | **5** |
|---|---|---|---|---|---|
| Trägermaterial | PCS-2 | PCS-2 | PCS-2 | PCS-2 | PCS-2 |
| PUR-Komponente | PUR-System 3 | PUR-System 1 | PUR-System 2 | PUR-System 3 | PUR-System 4 |
| Eigenschaften | | | | | |
| Anfangshaftung [Note] | 3 | 1 | 1 | 1 | 1 |
| Schaumadhäsion nach doppeltem KWT (02A) [Note] | 4 | 2 | 2 | 2 | 2 |
| Bloomingtest [Note] | 4 | 2 | 2 | 3 | 3 |

**Tabelle 3: Verbunde enthaltend verstärktes PC/ABS**

| Zusammensetzung | **6 (Vgl.)** | **7** | **8** | **9** | **10** |
|---|---|---|---|---|---|
| Trägermaterial | PCS-1 | PCS-1 | PCS-1 | PCS-1 | PCS-1 |
| PUR-Komponente | Stand der Technik*1 | PUR-System 1 | PUR-System 2 | PUR-System 3 | PUR-System 4 |
| Eigenschaften | | | | | |
| Anfangshaftung [Note] | 3 | 1 | 1 | 1 | 1 |
| Schaumadhäsion nach doppeltem KWT (02A) [Note] | 4 | 2 | 2 | 2 | 2 |
| Bloomingtest [Note] | 4 | 2 | 2 | 1 | 1 |

**Tabelle 4: Verbunde basierend auf Polypropylen-Träger**

| Zusammensetzung | **11 (Vgl)** | **12 (Vgl)** | **13 (Vgl)** | **14 (Vgl)** |
|---|---|---|---|---|
| Trägermaterial | Polypropylen-Träger | Polypropylen-Träger | Polypropylen-Träger | Polypropylen-Träger |
| PUR-Komponente | PUR-System 1 | PUR-System 2 | PUR-System 3 | PUR-System 4 |
| Eigenschaften | | | | |
| Anfangshaftung [Note] | 5 | 5 | 5 | 5 |
| Schaumadhäsion nach doppeltem KWT (02A) [Note] | 5 | 5 | 5 | 5 |
| Bloomingtest [Note] | 5 | 5 | 5 | 5 |

| | | | | |
|---|---|---|---|---|
| Definition der Notenskala: Note 1: sehr gute Haftung Note 2: gute Haftung Note 3: Haftung noch in Ordnung (PUR vom Träger mit Fingernagel abkratzbar) Note 4: schlecht (d.h. nur partielle Haftung) Note 5: blank (keine Haftung) | | | | |

Die Testergebnisse zeigen, dass die Schaumhaftung der erfindungsgemäßen Polycarbonat-Zusammensetzungen zu allen getesteten PUR-Systemen verbessert wurde. Im Gegensatz zu Polypropylen und unmodifizierten PC/ABS wird bei den erfindungsgemäßen Verbunden die geforderte Benotung 1 bis 3 eingehalten.

Die erfindungsgemäßen Polycarbonat-Zusammensetzungen weisen im Verbund auch nach Durchführung eines doppelten Klimawechseltests in Anlehnung an PV1200 der Volkswagen AG noch eine gute Haftung zur Polyurethan-Schicht auf.

## Patentansprüche

1. Verfahren zur Herstellung eines Verbundmaterials, **dadurch gekennzeichnet dass**
(i) eine geschäumte Polycarbonat-Formmasse mit Hilfe von chemischen oder physikalischen Schäumverfahren im Spritzgussverfahren hergestellt wird, wobei als Polycarbonat-Formmasse eine Zusammensetzung enthaltend
A) 20 - 99,9 Gew.-Teile aromatisches Polycarbonat und/oder aromatisches Poly-estercarbonat,
B) 0,1 - 40 Gew.-Teile kautschukmodifiziertes Pfropfpolymerisat,
C) 0 - 40 Gew.-Teile Vinyl(Co)Polymerisat (C.1) und/oder Polyalkylenterephthalat (C.2),
D) 0 bis 50 Gew.-Teile Glasfaser, und
E) 0 - 30 Gew.-Teile Teile Zusatzstoffe
eingesetzt wird, und
(ii) darauf ein Polyurethanreaktionssystem aufgebracht und ausreagiert gelassen wird.

2. Verfahren gemäß Anspruch 1, wobei als Polycarbonat-Formmasse Glasfasern enthält.

3. Verfahren gemäß Anspruch 1, wobei die die erfindungsgemäßen geschäumten Polycarbonat-Formmassen im Spritzgussverfahren hergestellt werden,
(i-1) indem die jeweiligen Bestandteile der Polycarbonat-Zusammensetzung vermischt werden,
(i-2) die aus Schritt (i-1) resultierende Mischung bei Temperaturen von 200°C bis 320°C in Aggregaten wie Innenknetern, Extrudern und Doppelwellenschnecken schmelzcompoundiert und schmelzextrudiert werden,
**dadurch gekennzeichnet, dass** in Schritt (i-2)
(i-2.1) ein Batch (enthaltend chemisches Treibmittel und mindestens eine der Komponenten A, B oder C) mit der aus Schritt (i-1) resultierenden Mischung dem Extruder zugeführt wird, oder
(i-2.2) ein chemisches Treibmittel mit der aus Schritt (i-1) resultierenden Mischung vermischt wird, oder
(i-2.3) ein physikalisches Treibmittel in die Schmelze zudosiert wird.

4. Verfahren gemäß Anspruch 1, wobei die die erfindungsgemäßen geschäumten Polycarbonat-Formmassen im Spritzgussverfahren hergestellt werden,
(i-1) indem die jeweiligen Bestandteile der Polycarbonat-Zusammensetzung vermischt werden,
(i-2) die aus Schritt (i-1) resultierende Mischung bei Temperaturen von 200°C bis 320°C in Aggregaten wie Innenknetern, Extrudern und Doppelwellenschnecken schmelzcompoundiert und schmelzextrudiert werden,
**dadurch gekennzeichnet, dass** in Schritt (i-2)
(i-2.3) ein physikalisches Treibmittel in die Schmelze zudosiert wird, wobei die Zudosierung
- in die Schnecke des Extruders oder der Doppelwellenschnecke, oder
- in den Schneckenvorraum des Extruders oder der Doppelwellenschnecke, oder
- in das resultierende Gemisch unmittelbar nach dem Innenkneter, Extruder oder der Doppelwellenschnecke
erfolgt.

## Claims

1. Method for producing a composite material, **characterised in that**
(i) a foamed polycarbonate moulding composition is produced by injection moulding using chemical or physical foaming techniques, wherein a composition containing
A) 20 to 99.9 parts by weight of aromatic polycarbonate and/or aromatic polyester carbonate,
B) 0.1 to 40 parts by weight of rubber-modified graft polymer,
C) 0 to 40 parts by weight of vinyl (co)polymer (C.1) and/or polyalkylene terephthalate (C.2),
D) 0 to 50 parts by weight of glass fibres, and
E) 0 to 30 parts by weight of additives is used as the polycarbonate moulding composition, and
(ii) a polyurethane reaction system is applied on top and allowed to cure.

2. Method according to claim 1, wherein the polycarbonate moulding composition contains glass fibres.

3. Method according to claim 1, wherein the foamed polycarbonate moulding compositions according to the invention are produced by injection moulding,
(i-1) by mixing the various constituents of the polycarbonate composition,
(i-2) by melt compounding and melt extruding the mixture resulting from step (i-1) at temperatures of 200°C to 320°C in units such as internal mixers, extruders and twin-shaft screws,
**characterised in that** in step (i-2)
(i-2.1) a batch (containing chemical blowing agent and at least one of components A, B or C) is fed to the extruder with the mixture resulting from step (i-1), or
(i-2.2) a chemical blowing agent is mixed with the mixture resulting from step (i-1), or (i-2.3) a physical blowing agent is added to the melt.

4. Method according to claim 1, wherein the foamed polycarbonate moulding compositions according to the invention are produced by injection moulding,
(i-1) by mixing the various constituents of the polycarbonate composition,
(i-2) by melt compounding and melt extruding the mixture resulting from step (i-1) at temperatures of 200°C to 320°C in units such as internal mixers, extruders and twin-shaft screws,
**characterised in that** in step (i-2) (i-2.3)
a physical blowing agent is added to the melt, the addition being made
- to the screw of the extruder or the twin-shaft screw, or
- to the space in front of the screw of the extruder or the twin-shaft screw, or
- to the resulting mixture immediately after the internal mixer, extruder or twin-shaft screw.

## Revendications

1. Procédé de fabrication d'un matériau composite, **caractérisé en ce que**
(i) un matériau de moulage en polycarbonate moussé est fabriqué à l'aide de procédés de moussage chimiques ou physiques par le procédé de moulage par injection, une composition contenant
A) 20 à 99,9 parties en poids d'un polycarbonate aromatique et/ou d'un polyester-carbonate aromatique,
B) 0,1 à 40 parties en poids d'un polymère greffé modifié par un caoutchouc,
C) 0 à 40 parties en poids d'un (co)polymère de vinyle (C.1) et/ou d'un polyalkylène-téréphtalate (C.2),
D) 0 à 50 parties en poids de fibres de verre, et
E) 0 à 30 parties en poids d'additifs,
étant utilisée en tant que matériau de moulage en polycarbonate, et
(ii) un système réactionnel de polyuréthane est appliqué sur celui-ci et laissé réagir.

2. Procédé selon la revendication 1, dans lequel le matériau de moulage en polycarbonate contient des fibres de verre.

3. Procédé selon la revendication 1, dans lequel les matériaux de moulage en polycarbonate moussés selon l'invention sont fabriqués par le procédé de moulage par injection par
(i-1) mélange des constituants respectifs de la composition de polycarbonate,
(i-2) malaxage à l'état fondu et extrusion à l'état fondu du mélange résultant de l'étape (i-1) à des températures de 200 °C à 320 °C dans des appareils tels que des malaxeurs internes, des extrudeuses et des vis à deux arbres,
**caractérisé en ce qu'**à l'étape (i-2)
(i-2.1) un lot (contenant un agent gonflant chimique et au moins un des composants A, B ou C) est introduit dans l'extrudeuse avec le mélange résultant de l'étape (i-1), ou
(i-2.2) un agent gonflant chimique est mélangé avec le mélange résultant de l'étape (i-1), ou
(i-2.3) un agent gonflant physique est ajouté à la masse fondue.

4. Procédé selon la revendication 1, dans lequel les matériaux de moulage en polycarbonate moussés selon l'invention sont fabriqués par le procédé de moulage par injection, par
(i-1) mélange des constituants respectifs de la composition de polycarbonate,
(i-2) malaxage à l'état fondu et extrusion à l'état fondu du mélange résultant de l'étape (i-1) à des températures de 200 °C à 320 °C dans des appareils tels que des malaxeurs internes, des extrudeuses et des vis à deux arbres,
**caractérisé en ce qu'**à l'étape (i-2)
(i-2.3) un agent gonflant physique est ajouté à la masse fondue, l'ajout ayant lieu
- dans la vis de l'extrudeuse ou de la vis à deux arbres, ou
- dans l'antichambre de la vis de l'extrudeuse ou de la vis à deux arbres, ou
- dans le mélange résultant directement après le malaxeur interne, l'extrudeuse ou la vis à deux arbres.
